# EUROPEAN PATENT SPECIFICATION

(11) **EP 3 176 915 B1**
(45) Date of publication and mention of the grant of the patent: **09.12.2020**
(21) Application number: 14899013.8
(22) Date of filing: 01.08.2014
(51) Int. Cl.: H02K 3/32, H02K 3/52

(54) **STATOR FOR ELECTRIC MOTOR**
STATOR FÜR ELEKTROMOTOR
STATOR POUR MOTEUR ÉLECTRIQUE

(43) Date of publication of application: 07.06.2017
(73) Proprietor: Mitsubishi Electric Corporation, Chiyoda-ku Tokyo 100-8310 (JP)
(72) Inventor: NAKAMURA, Koichi, Tokyo 100-8310 (JP); TSUJI, Kosei, Tokyo 100-8310 (JP); ENOMOTO, Kazuyuki, Tokyo 100-8310 (JP); YOSHIDA, Kempei, Tokyo 100-8310 (JP)
(74) Representative: Diehl & Partner
(86) International application number: PCT/JP2014/070363
(87) International publication number: WO 2016/017030

(56) References cited:
- JP-A- H10 174 337
- JP-A- 2002 354 737
- JP-A- 2003 061 286
- JP-A- 2008 167 518
- JP-A- 2012 244 782
- US-A1- 2007 222 324
- US-A1- 2012 080 976
- US-A1- 2013 193 800

## Description

### Field

The present invention relates to an electric motor stator in which a stator core and a winding are insulated from each other by an insulation sheet.

### Background

A conventional stator includes a stator core, an insulator, an insulation sheet, and a winding wound around a teeth portion of the stator core to which the insulation sheet and the insulator are attached. A conventional stator described in Patent Literature 1 listed below has a shape in which an insulator sandwiches both ends of an insulation sheet positioned to match the shape of a teeth portion. Due to this shape, the insulation distance between a stator core and a winding can be maintained, so that an electric motor stator with high dimensional accuracy of the insulation sheet can be obtained.

### Citation List

### Patent Literature

Patent Literature 1: Japanese Patent Application Laid-open No. 2008-167518.
Patent Literature 2: United States Patent Application Publication No. Us 2007/0222324 A1.

### Summary

### Technical Problem

However, in the conventional stator shown in Patent Literature 1 described above, the insulation sheet is fixed to the teeth portion by the insulator, and therefore a step is generated between the insulator and the insulation sheet due to the thickness of the insulator. This step causes generation of a gap corresponding to the thickness of the insulator between the insulation sheet and the winding, resulting in reduction of a space where the winding is wound around by the amount corresponding to the thickness of the insulator. Accordingly, the conventional stator in Patent Literature 1 described above has a difficulty in meeting needs of further improvement of the efficiency of an electric motor.
US patent application 2007/0222324 A1 discloses a stator for a rotary electrical machine having stator teeth, with each individual stator tooth having an insulator made from hard insulation material disposed on each of the two axial ends of the tooth's iron core. Each insulator has an end wall disposed along an axial end surface the tooth, side walls extending alongside surfaces of the tooth, and flanges projecting from an upper end and a lower end of the end wall and the side wall outwardly. A pair of electrical-insulation sheets covers the sidewalls of the iron core and engages with the insulators to form a superposition portion. The outer surface of the electrical-insulation sheets are aligned with the adjacent outer surfaces of the insulators.

The present invention has been achieved in view of the above problems, and an object of the present invention is to provide an electric motor stator that can further improve its efficiency.

### Solution to Problem

The above-described problem is solved and the object is achieved by an electric motor stator according to claim 1.

### Advantageous Effects of Invention

According to the present invention, an effect is obtained where the efficiency of the electric motor stator can be further improved.

### Brief Description of Drawings

FIG. 1 is a perspective view of an electric motor stator according to a first embodiment of the present invention.
FIG. 2 is a perspective view of a stator core and an insulator in a state where an insulation sheet is removed.
FIG. 3 is a perspective view of the insulator.
FIG. 4 is a perspective view illustrating a state where the insulation sheet is inserted into the insulator.
FIG. 5 is a cross sectional view on arrows A and A' in FIG. 4.
FIG. 6 is a cross-sectional view of the insulator, the insulation sheet, and a winding.
FIG. 7 is a cross-sectional view illustrating a state where two insulators are arrayed side by side.
FIG. 8 is first cross-sectional view on arrows A and A' in a state where the winding is formed.
FIG. 9 is a second cross-sectional view on arrows A and A' in the state where the winding is formed.
FIG. 10 is a third cross-sectional view on arrows A and A' in the state where the winding is formed.
FIG. 11 is a cross-sectional view of a teeth portion of the stator according to the first embodiment.
FIG. 12 is a cross-sectional view of a teeth portion of a conventional stator.
FIG. 13 is a perspective view of an electric motor stator according to a second embodiment of the present invention.
FIG. 14 is a perspective view of a stator core and an insulator in a state where an insulation sheet is removed.
FIG. 15 is a perspective view illustrating a state where the insulation sheet is inserted into the insulator.
FIG. 16 is a cross-sectional view on arrows A and A' in FIG. 15.
FIG. 17 is a cross-sectional view on arrows A and A' in a state where a winding is formed.
FIG. 18 is a cross-sectional view on arrows B and B' in FIG. 15.
FIG. 19 is a cross-sectional view on arrows B and B' in the state where the winding is formed.
FIG. 20 is a perspective view of an electric motor stator according to a third embodiment not according to the present invention.
FIG. 21 is a perspective view of a stator core and an insulator in a state where an insulation sheet is removed.
FIG. 22 is a cross-sectional view when an inner side surface of a flange of an end is tapered.
FIG. 23 is a cross-sectional view when an inner side surface of a yoke-contact portion of the end is tapered.
FIG. 24 is a cross-sectional view when a tip of the flange and a tip of the yoke-contact portion are formed to have a curved shape.
FIG. 25 is a cross-sectional view when an inner side surface of a flange of a body portion is tapered.
FIG. 26 is a cross-sectional view when an inner side surface of a yoke-contact portion of the body portion is tapered.
FIG. 27 is a cross-sectional view when a tip of the flange is formed to have a curved shape.

### Description of Embodiments

Embodiments of an electric motor stator according
to the present invention and not according to the present invention will be explained below in detail with reference to the accompanying drawings. The present invention is not limited to the embodiments.

### First embodiment.

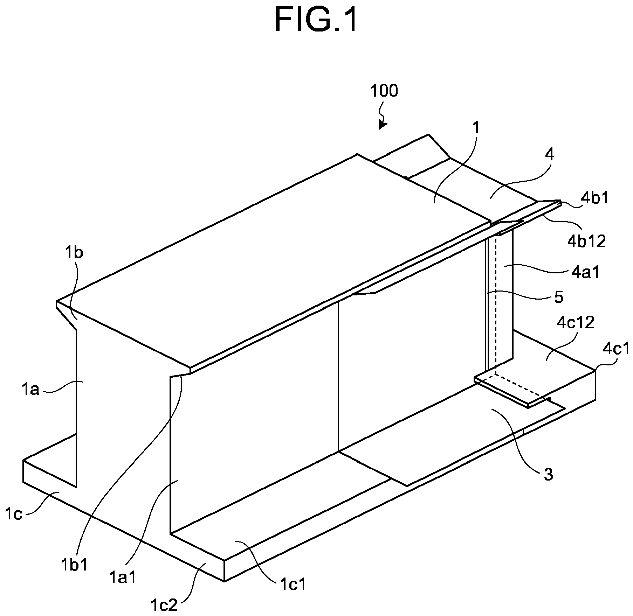

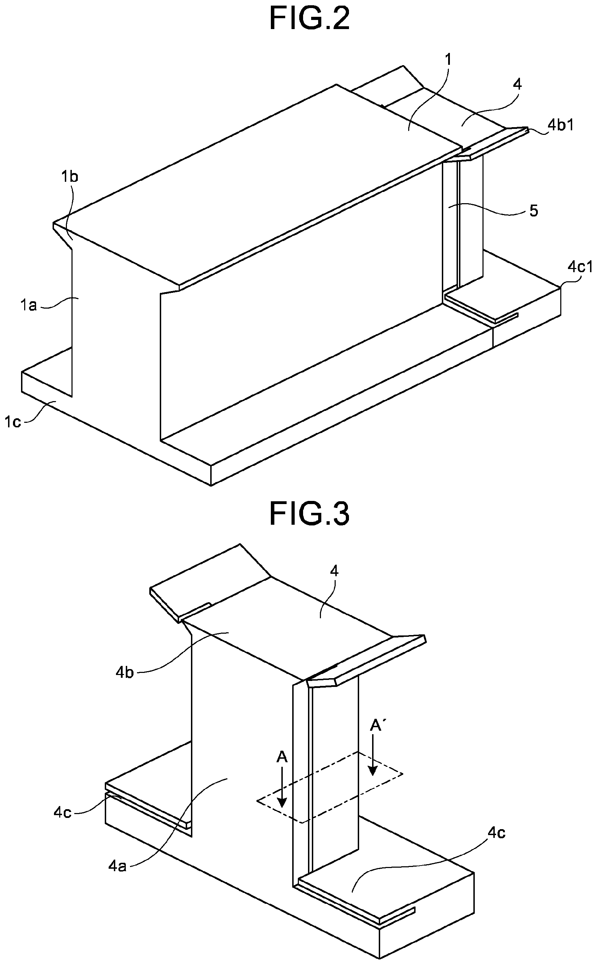

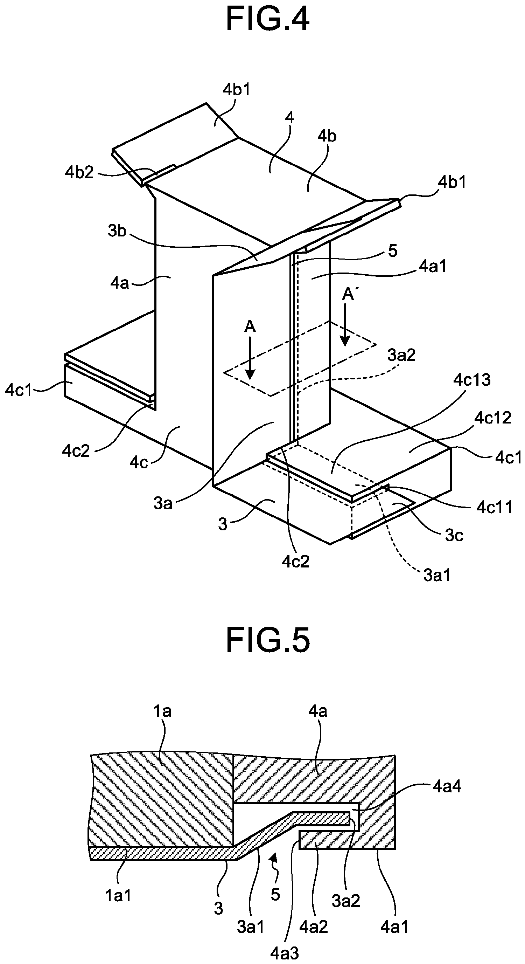

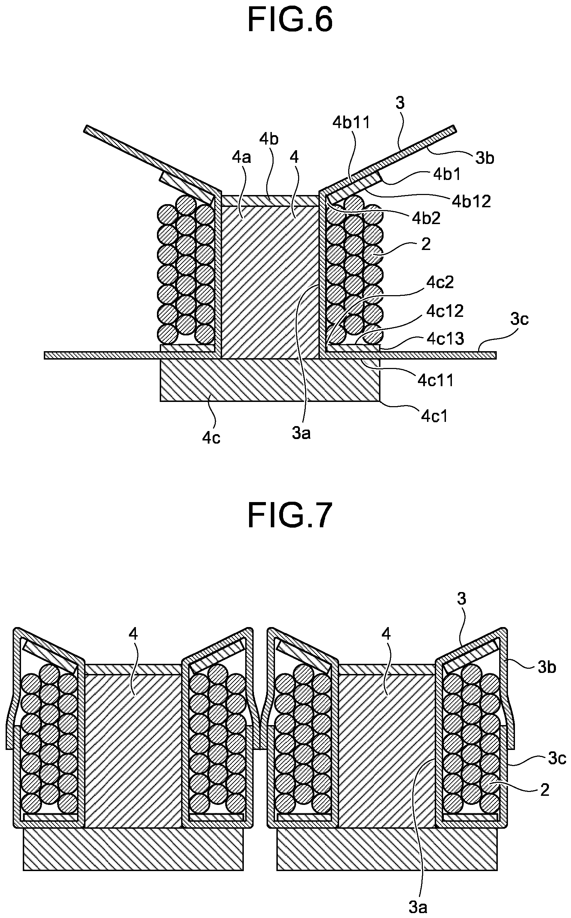

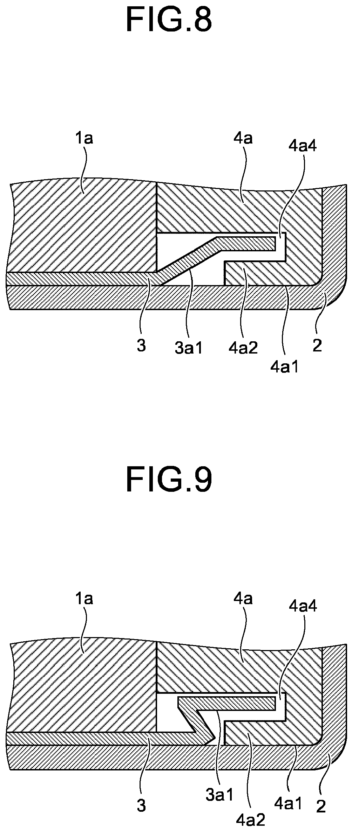

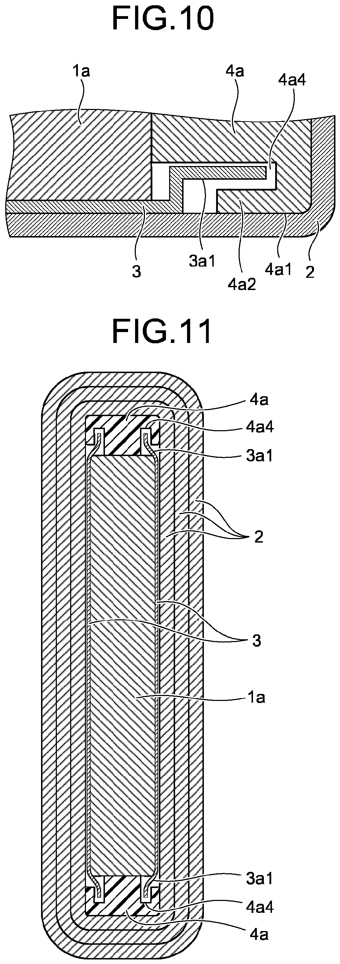

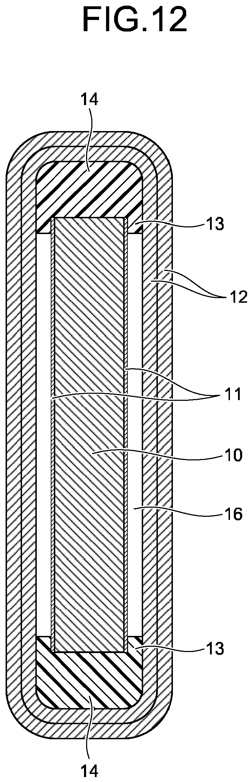

FIG. 1 is a perspective view of an electric motor stator according to a first embodiment of the present invention. FIG. 2 is a perspective view of a stator core and an insulator in a state where an insulation sheet is removed. FIG. 3 is a perspective view of the insulator. FIG. 4 is a perspective view of a state where the insulation sheet is inserted into the insulator. FIG. 5 is a cross-sectional view on arrows A and A' in FIG. 4. FIG. 6 is a cross-sectional view of the insulator, the insulation sheet, and a winding. FIG. 7 is a cross-sectional view illustrating a state where two insulators are arrayed side by side. FIG. 8 is a first cross-sectional view on arrows A and A' in a state where the winding is formed. FIG. 9 is a second cross-sectional view on arrows A and A' in the state where the winding is formed. FIG. 10 is a third cross-sectional view on arrows A and A' in the state where the winding is formed. FIG. 11 is a cross-sectional view of a teeth portion of the stator according to the first embodiment. FIG. 12 is a cross-sectional view of a teeth portion of a conventional stator.

As illustrated in FIGS. 1 to 7, an electric motor stator 100 includes a stator core 1 constituted by stacking a plurality of silicon steel plates, an insulation sheet 3 that insulates and covers the stator core 1, an insulator 4 attached to an axial end of the stator core 1, and a winding 2 (see FIGS. 6 to 11) wound around the stator core 1 to which the insulation sheet 3 and the insulator 4 are attached.

The stator core 1 includes a teeth portion 1a, a teeth-tip portion 1b, and a yoke portion 1c. The stator core 1 is formed to have a T-shape, and after the winding 2 is wound, the yoke portions 1c are joined to each other, so that an annular or planar stator is obtained. The insulation sheet 3 is attached along an inner surface 1c1 of the yoke portion 1c, an inner surface 1b1 of the teeth-tip portion 1b, and a side surface 1a1 of the teeth portion 1a.

The insulator 4 includes an outer flange portion 4c positioned at an axial end of the yoke portion 1c, an inner flange portion 4b positioned at an axial end of the teeth-tip portion 1b, and a body portion 4a that is positioned at an axial end of the teeth portion 1a and connects the outer flange portion 4c and the inner flange portion 4b. The insulator 4 is formed to have a T-shape. The insulator 4 is manufactured by using a mold, pressing, or using a 3D printer.

Outlines of an inner surface 4c12 of the outer flange portion 4c, a side surface 4a1 of the body portion 4a, and an inner surface 4b12 of the inner flange portion 4b are formed to be the same as outlines of the inner surface 1c1 of the yoke portion 1c, the side surface 1a1 of the teeth portion 1a, and the inner surface 1b1 of the teeth-tip portion 1b.

As illustrated in FIG. 4, a groove 4c11 is formed in an end 4c1 of the outer flange portion 4c. The groove 4c11 is formed to have a concaved shape in a direction from the yoke portion 1c towards the end 4c1, and is located on the side of an outer surface 1c2 of an extension line of the inner surface 1c1 of the yoke portion 1c. By forming the groove 4c11, a flange 4c13 is formed in the inner surface 4c12 of the end 4c1 of the outer flange portion 4c. An insertion portion 3a1 of the insulation sheet 3 is inserted into the groove 4c11. The insertion portion 3a1 is a portion of the insulation sheet 3 projecting from an axial end face of the yoke portion 1c towards the end 4c1, and is inserted into the groove 4c11 when the insulator 4 is attached to the stator core 1.

A gap 4b2 is formed on an end 4b1 of the inner flange portion 4b. The gap 4b2 is formed to have a concaved shape in a direction from the teeth-tip portion 1b towards the end 4b1. A portion of the insulation sheet 3 projecting from an axial end face of the teeth-tip portion 1b towards the end 4b1 is inserted into the gap 4b2.

As illustrated in FIG. 5, a groove 4a4 formed in the side surface 4a1 of the body portion 4a. The groove 4a4 is formed to have a concaved shape in a direction from the teeth portion 1a towards the body portion 4a, and is located closer to a center of the body portion 4a than an extension line of the side surface 1a1 of the teeth portion 1a. By forming the groove 4a4, a flange 4a2 is formed in the side surface 4a1 of the body portion 4a. An end 4a3 of the flange 4a2 is opposed to the teeth portion 1a and is positioned away from the teeth portion 1a by a certain width. Due to this positioning, a gap 5 is formed between the end 4a3 of the flange 4a2 and the teeth portion 1a. An insertion portion 3a1 of the insulation sheet 3 is inserted into the gap 5. The insertion portion 3a1 is a portion of the insulation sheet 3 projecting from the axial end face of the teeth portion 1a towards the body portion 4a, and is inserted into the groove 4a4 when the insulator 4 is attached to the stator core 1.

A conventional stator illustrated in FIG. 12 has a shape in which flanges 13 of an insulator 14 cover ends of a teeth portion 10 and sandwich an insulation sheet 11. Therefore, due to the thickness of the flange 13, a step is generated between the insulator 14 and the insulation sheet 11. This step causes generation of a gap 16 corresponding to the thickness of the flange 13 between the insulation sheet 11 and a winding 12, resulting in reduction of a space in which the winding 12 is wound by the amount corresponding to the gap 16.

In contrast, in the stator 100 according to the first embodiment illustrated in FIG. 11, the insertion portion 3a1 is inserted into the groove 4a4. Therefore, only the insulation sheet 3 is interposed between the winding 2 and the teeth portion 1a, so that the winding 2 can be wound around the teeth portion 1a without a gap. Due to this configuration, size reduction can be achieved for the same output, and an output of the electric motor can be improved for the same shape. In addition, the insulation sheet 3 is axially positioned with respect to the stator core 1 by being inserted into a gap 5, and therefore the insulation sheet 3 cannot be shifted.

FIGS. 6 and 7 illustrate a cross section of the body portion 4a of the insulator 4. The insulation sheet 3 inserted into the gap 4b2 and a gap 4c2 extends in a direction perpendicular to a core axis of the stator core 1. An outer-flange-side cover portion 3c of the insulation sheet 3 extending towards the flange 4c13 of the outer flange portion 4c is bent towards the inner surface 4c12 at a tip of the flange 4c13. An inner-flange-side cover portion 3b of the insulation sheet 3 extending towards the end 4b1 of the inner flange portion 4b is bent towards the inner surface 4b12 at a tip of the end 4b1. Due to this configuration, the winding 2 is surrounded by a body-portion-side cover portion 3a, the inner-flange-side cover portion 3b, and the outer-flange-side cover portion 3c of the insulation sheet 3. Therefore, when the stator cores 1 are positioned side by side, the windings 2 respectively wound around the adjacent stator cores 1 do not come into contact with each other, so that interphase insulation can be ensured.

FIGS. 8 to 10 illustrate a configuration for ensuring an insulation creepage distance between the winding 2 and the stator core 1. The insulation sheet 3 illustrated in FIG. 8 has the same shape as the insulation sheet 3 illustrated in FIG. 5, and the insertion portion 3a1 is inserted into the groove 4a4 in a slanted manner. In the insulation sheet 3 illustrated in FIGS. 9 and 10, the insertion portion 3a1 is bent into a crank shape and is then inserted into the groove 4a4. Particularly, the insertion portion 3a1 illustrated in FIG. 9 is folded. By changing the shape of the insertion portion 3a1 in this manner, the insulation creepage distance between the winding 2 and the stator core 1 in a portion of the gap 5 can be ensured. Further, the insulation creepage distance can be also ensured by adjusting the width of the gap 5 or adjusting the angle of insertion of the insertion portion 3a1 to the groove 4a4, other than the insertion methods illustrated in FIGS. 8 to 10.

### Second embodiment.

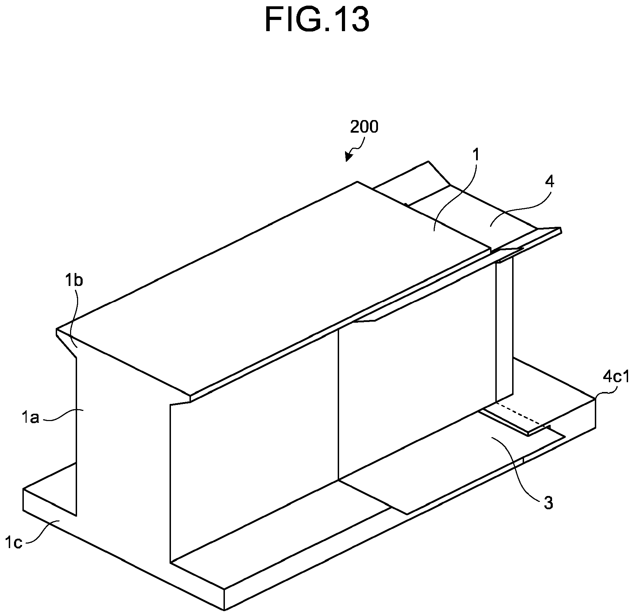

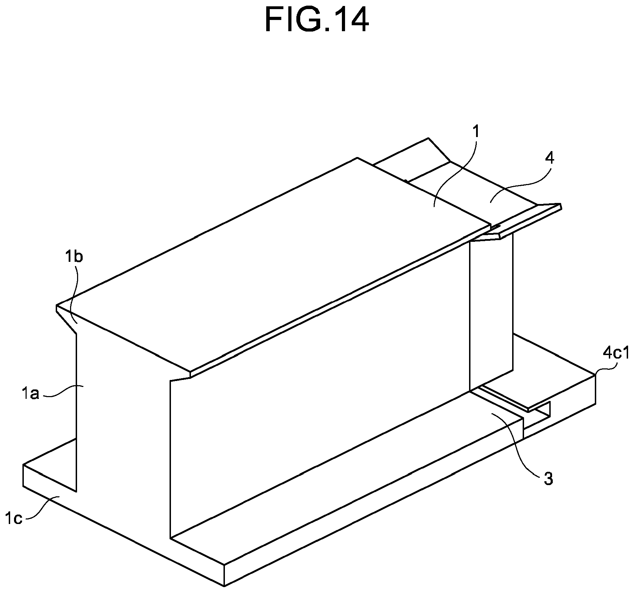

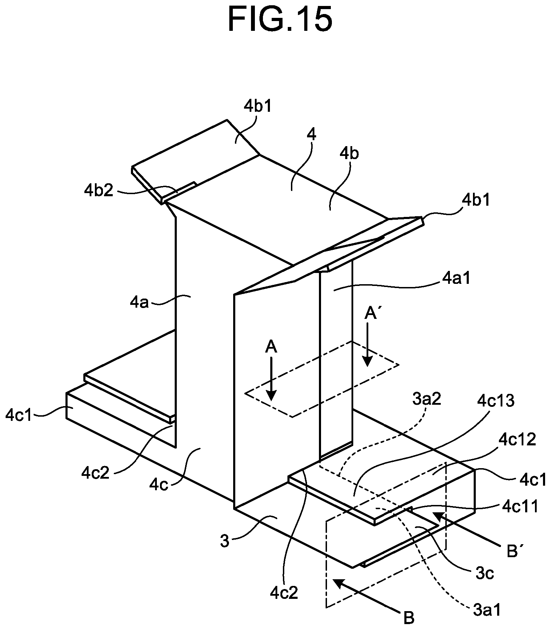

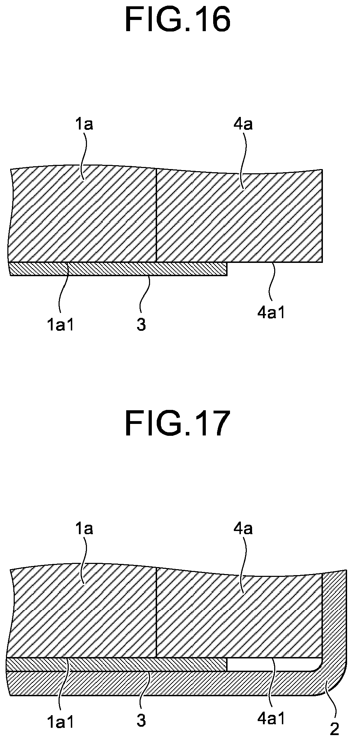

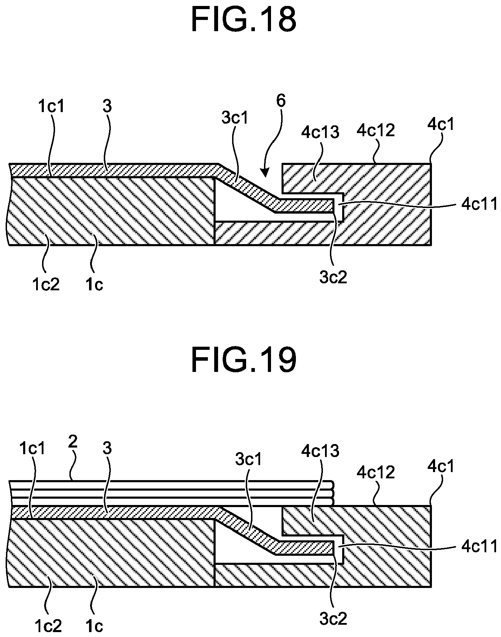

FIG. 13 is a perspective view of an electric motor stator according to a second embodiment of the present invention. FIG. 14 is a perspective view of a stator core and an insulator in a state where an insulation sheet is removed. FIG. 15 is a perspective view illustrating a state where the insulation sheet is inserted into the insulator. FIG. 16 is a cross-sectional view on arrows A and A' in FIG. 15. FIG. 17 is a cross-sectional view on arrows A and A' in a state where a winding is formed. FIG. 18 is a cross-sectional view on arrows B and B' in FIG. 15. FIG. 19 is a cross-sectional view on arrows B and B' in the state where the winding is formed.

While the groove 4a4 is not formed in a stator 200 according to the second embodiment, the stator 200 has a shape in which the insulation sheet 3 is inserted into the groove 4c11 formed in the end 4c1 of the outer flange portion 4c and into the gap 4b2 formed in the inner flange portion 4b. In the second embodiment, elements identical to those of the first embodiment are denoted by like reference signs and descriptions thereof will be omitted, and only elements different from those of the first embodiment are described here.

Because the groove 4a4 is not formed in the stator 200, as illustrated in FIGS. 16 and 17, the insulation sheet 3 projecting from the axial end face of the teeth portion 1a is positioned on the side surface 4a1 of the body portion 4a. In this case, as illustrated in FIG. 17, a gap is generated between the side surface 4a1 of the body portion 4a and the winding 2; however, an insulation creepage distance between the winding 2 and the stator core 1 can be ensured.

As illustrated in FIG. 18, the groove 4c11 is formed in the inner surface 4c12 of the end 4c1. The groove 4c11 is formed to have a concaved shape in a direction from the yoke portion 1c towards the end 4c1, and is located on the side of the outer surface 1c2 of the extension line of the inner surface 1c1 of the yoke portion 1c. As illustrated in FIG. 19, when the winding 2 is formed on the inner surface 4c12 of the end 4c1, only the insulation sheet 3 is interposed between the winding 2 and the yoke portion 1c, so that the winding 2 can be wound around the yoke portion 1c without a gap. Therefore, size reduction can be achieved for the same output, and improvement of an output can be achieved for the same shape. Further, the insulation sheet 3 is axially positioned with respect to the stator core 1 by being inserted into a gap 6, and therefore the insulation sheet 3 cannot be shifted.

### Third embodiment.

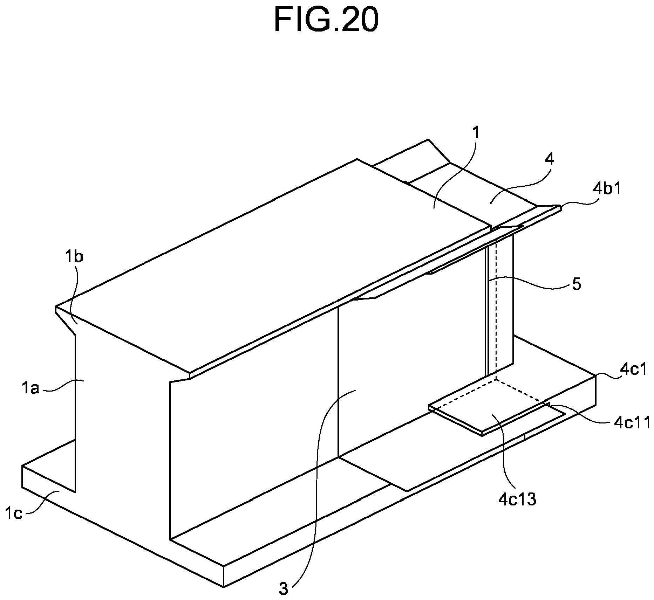

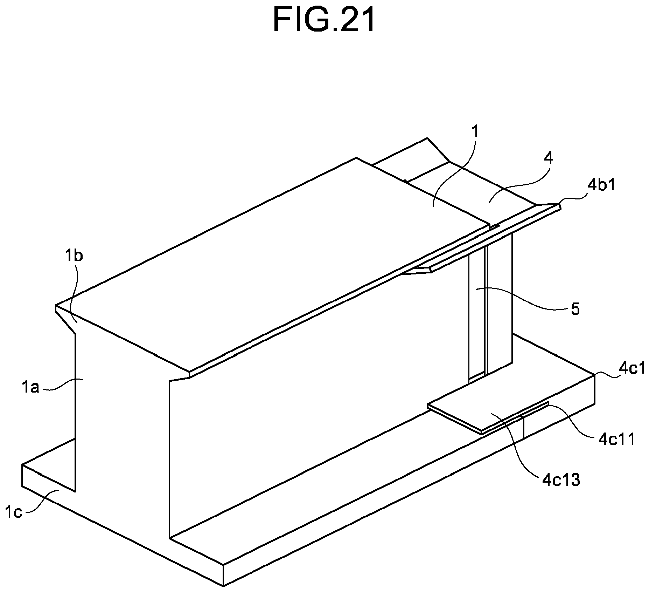

FIG. 20 is a perspective view of an electric motor stator according to a third embodiment which is not according to the present invention. FIG. 21 is a perspective view of a stator core and an insulator in a state where an insulation sheet is removed. The third embodiment is a configuration in which the end 4b1 and the flange 4c13 of the insulator 4 are extended towards the stator core 1. The end 4b1 and the flange 4c13 being extended towards the stator core 1 are positioned to be inserted between the inner surface 1b1 of the teeth-tip portion 1b and the inner surface 1c1 of the yoke portion 1c. In the examples of FIGS. 20 and 21, two ends 4b1 and two flanges 4c13 extend towards the stator core 1. The insulation sheet 3 is positioned between the ends 4b1 and the teeth-tip portion 1b, and also between the flanges 4c13 and the yoke portion 1c. Due to this configuration, the insulator 4 and the insulation sheet 3 before the winding 2 is wound are fixed, so that positional shift can be prevented.

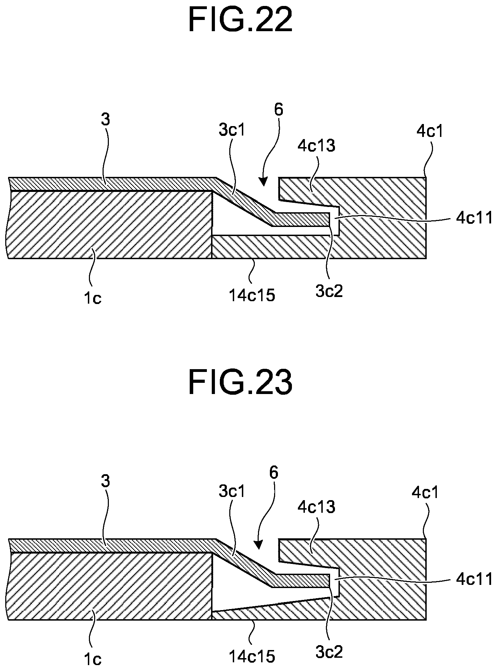

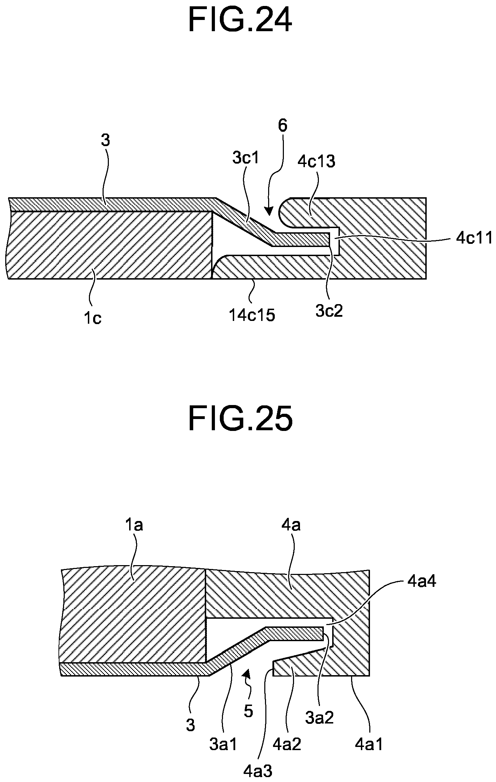

The stators 100, 200, and 300 described in the first to third embodiments may also have the following configuration. FIG. 22 is a cross-sectional view when an inner side surface of the flange 4c13 of the end 4c1 is tapered. FIG. 23 is a cross-sectional view when an inner side surface of a yoke-contact portion 4c15 of the end 4c1 is tapered. FIG. 24 is a cross-sectional view when a tip of the flange 4c13 and a tip of the yoke-contact portion 4c15 are formed to have a curved shape. As illustrated in the examples of FIGS. 22 and 23, the gap 6 is widened by tapering the inner side surface of the flange 4c13 or the inner side surface of the yoke-contact portion 4c15, so that the insertion portion 3c1 can be easily inserted into a groove 4c11. Further, by forming the tip of the flange 4c13 and the tip of the yoke-contact portion 4c15 to have a curved shape, it is possible to insert the insulation sheet 3 into the groove 4c11 without damaging the insulation sheet 3.

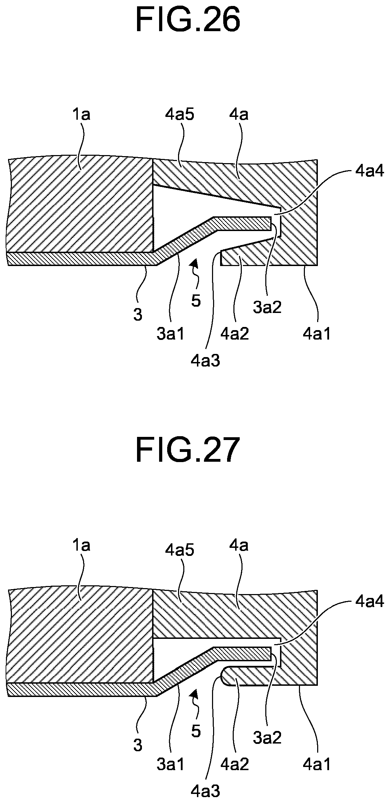

FIG. 25 is a cross-sectional view when an inner side surface of the flange 4a2 of the body portion 4a is tapered. FIG. 26 is a cross-sectional view when an inner side surface of a yoke-contact portion 4a5 of the body portion 4a is tapered. FIG. 27 is a cross-sectional view when a tip of the flange 4a2 is formed to have a curved shape. As illustrated in the examples of FIGS. 25 to 27, the gap 6 is widened by tapering the inner side surface of the flange 4a2 or the inner side surface of the yoke-contact portion 4a5, so that the insertion portion 3a1 can be easily inserted into the groove 4a4. Further, by forming the tip of the flange 4a2 to have a curved shape, it is possible to insert the insulation sheet 3 to the groove 4a4 without damaging the insulation sheet 3.

### Reference Signs List

1 stator core, 1a teeth portion, 1a1 side surface, 1b teeth-tip portion, 1b1 inner surface, 1c yoke portion, 1c1 inner surface, 1c2 outer surface, 2 winding, 3 insulation sheet, 3a body-portion-side cover portion, 3a1 insertion portion, 3a2 end, 3b inner-flange-side cover portion, 3b1 end, 3c outer-flange-side cover portion, 3c1 insertion portion, 3c2 end, 4 insulator, 4a body portion, 4a1 side surface, 4a2 flange, 4a3 end, 4a4 groove, 4a5 yoke-contact portion, 4b inner flange portion, 4b1 end, 4b12 inner surface, 4b2 gap, 4c outer flange portion, 4c1 end, 4c11 groove, 4c12 inner surface, 4c13 flange, 4c15 yoke-contact portion, teeth side surface, 4c2, 5, 6 gap, 100, 200, 300 stator.

## Claims

1. An electric motor stator comprising:
a stator core (1);
two insulators (4), each insulator (4) being provided at one of both axial ends of the stator core (1);
two insulation sheets (3), each insulation sheet (3) being attached to one of both side surfaces of the stator core (1) in a direction perpendicular to an axial direction of the stator core (1); and a winding (2) wound around the stator core (1) to which the insulators (4) and the insulation sheets (3) are attached, wherein side surfaces (4a1, 4c12) of each of the insulators (4) are respectively aligned with side surfaces of a corresponding one of the insulation sheets (3) attached to the stator core (1) such that the winding (2) is wound around the stator core (1) to which the insulators (4) and the insulation sheets (3) are attached without a gap between the winding (2) and each of the insulation sheets (3),
**characterized in that**
a groove (4a4, 4c11) is formed in a respective one of the side surfaces (4a1, 4c12) of each insulator (4), on which the winding (2) is wound, the groove (4a4, 4c11) forms a flange (4a2, 4c13) in the side surface (4a1, 4c12) of the insulator (4) with an end (4a3) of the flange (4a2, 4c13) being opposed to and spaced from the corresponding axial end of the stator core (1), and an axial end of each insulation sheet (3) attached to the corresponding side surface of the stator core (1), on which the winding (2) is wound, is inserted into the groove (4a1, 4c11) through a gap (5, 6) formed between the end (4a3) of the flange (4a2, 4c13) and the corresponding axial end of the stator core (1).

2. The electric motor stator according to claim 1, wherein the axial end of the insulation sheet (3) is inserted into the groove in a slanted manner.

3. The electric motor stator according to claim 1, wherein the axial end of the insulation sheet (3) is inserted into the groove such that the inserted portion of the insulation sheet is folded into a crank shape.

4. The electric motor stator according to any one of claims 1 to 3, wherein an inner side surface of the groove (4a4, 4c11) of each insulator (4), into which the axial end of the insulation sheet (3) is inserted, is tapered such that the groove widens to it's opening.

5. The electric motor stator according to any one of claims 1 to 4, wherein the end of the flange is formed to have a curved shape.

6. The electric motor stator according to claim 1, wherein the groove (4c11) is formed in an inner surface (4c12) of an outer flange portion (4c) of each insulator (4) which is provided at an axial end of a yoke portion (1c) of the stator core (1).

7. The electric motor stator according to claim 1 or 6, wherein the groove (4a4) is formed in a side surface (4a1) of a body portion (4a) of each insulator (4) which is provided at an axial end of a teeth portion (1a) of the stator core (1).

## Patentansprüche

1. Stator für einen Elektromotor, aufweisend:
einen Statorkern (1);
zwei Isolatoren (4), wobei jeder Isolator (4) an einem der beiden axialen Enden des Statorkerns (1) vorgesehen ist;
zwei Isolierblätter (3), wobei jedes Isolierblatt (3) an einer der beiden Seitenflächen des Statorkerns (1) in einer Richtung senkrecht zu einer axialen Richtung des Statorkerns (1) befestigt ist; und
eine um den Statorkern (1) gewickelte Wicklung (2), an der die Isolatoren (4) und die Isolierblätter (3) befestigt sind, wobei
Seitenflächen (4a1, 4c12) jedes der Isolatoren (4) jeweils mit Seitenflächen eines entsprechenden, am Statorkern (1) befestigten Isolierblatts (3) so ausgerichtet sind, dass die Wicklung (2) ohne einen Spalt zwischen der Wicklung (2) und jedem der Isolierblätter (3) um den Statorkern (1), an dem die Isolatoren (4) und die Isolierblatte (3) befestigt sind, gewickelt ist,
**dadurch gekennzeichnet, dass**
eine Nut (4a4, 4c11) in einer jeweiligen der Seitenflächen (4a1, 4c12) jedes Isolators (4) ausgebildet ist, auf die die Wicklung (2) gewickelt ist, wobei die Nut (4a4, 4c11) in der Seitenfläche (4a1, 4c12) des Isolators (4) einen Flansch (4a2, 4c13) bildet, wobei ein Ende (4a3) des Flansches (4a2, 4c13) dem entsprechenden axialen Ende des Statorkerns (1) gegenüberliegt und von diesem beabstandet ist, und ein axiales Ende jedes der an der entsprechenden Seitenfläche des Statorkerns (1) befestigten Isolierblatts (3), auf das die Wicklung (2) gewickelt ist, durch einen zwischen dem Ende (4a3) des Flansches (4a2, 4c13) und dem entsprechenden axialen Ende des Statorkerns (1) gebildeten Spalt (5, 6) in die Nut (4a1, 4c11) eingeführt ist.

2. Stator für einen Elektromotor nach Anspruch 1, wobei das axiale Ende des Isolierblatts (3) schräg in die Nut eingeführt ist.

3. Stator für einen Elektromotor nach Anspruch 1, wobei das axiale Ende des Isolierblatts (3) so in die Nut eingeführt ist, dass der eingeführte Teil des Isolierblatts in eine Kurbelform gefaltet wird.

4. Stator für einen Elektromotor nach einem der Ansprüche 1 bis 3, wobei eine innere Seitenfläche der Nut (4a4, 4c11) jedes Isolators (4), in den das axiale Ende des Isolierblatts (3) eingeführt ist, so verjüngt ist, dass sich die Nut hin zu ihrer Öffnung weitet.

5. Stator für einen Elektromotor nach einem der Ansprüche 1 bis 4, wobei das Ende des Flansches so geformt ist, dass es eine gekrümmte Form hat.

6. Stator für einen Elektromotor nach Anspruch 1, wobei die Nut (4c11) in einer inneren Oberfläche (4c12) eines äußeren Flanschabschnitts (4c) jedes Isolators (4) ausgebildet ist, der an einem axialen Ende eines Jochabschnitts (1c) des Statorkerns (1) vorgesehen ist.

7. Stator für einen Elektromotor nach Anspruch 1 oder 6, wobei die Nut (4a4) in einer Seitenfläche (4a1) eines Körperabschnitts (4a) jedes Isolators (4) ausgebildet ist, der an einem axialen Ende eines Zahnabschnitts (1a) des Statorkerns (1) vorgesehen ist.

## Revendications

1. Stator de moteur électrique comprenant :
un noyau de stator (1) ;
deux isolateurs (4), chaque isolateur (4) étant prévu à l'une des deux extrémités axiales du noyau de stator (1) ;
deux feuilles d'isolation (3), chaque feuille d'isolation (3) étant fixée à l'une des deux surfaces latérales du noyau de stator (1) dans une direction perpendiculaire à une direction axiale du noyau de stator (1) ; et
un enroulement (2) enroulé autour du noyau de stator (1) auquel les isolateurs (4) et les feuilles d'isolation (3) sont fixés, dans lequel
des surfaces latérales (4a1, 4c12) de chacun des isolateurs (4) sont alignées respectivement avec les surfaces latérales de l'une correspondante des feuilles d'isolation (3) fixées au noyau de stator (1) de telle sorte que l'enroulement (2) soit enroulé autour du noyau de stator (1) auquel les isolateurs (4) et les feuilles d'isolation (3) sont fixés sans espace entre l'enroulement (2) et chacune des feuilles d'isolation (3),
**caractérisé**
**en ce qu'**une rainure (4a4, 4c11) est formée dans l'une respective des surfaces latérales (4a1, 4c12) de chaque isolateur (4), sur laquelle l'enroulement (2) est enroulé, la rainure (4a4, 4c11) forme un rebord (4a2, 4c13) dans la surface latérale (4a1, 4c12) de l'isolateur (4), avec une extrémité (4a3) du rebord (4a2, 4c13) étant opposée à l'extrémité axiale correspondante du noyau de stator (1) et espacée de celle-ci, et une extrémité axiale de chaque feuille d'isolation (3) fixée à la surface latérale correspondante du noyau de stator (1), sur laquelle l'enroulement (2) est enroulé, est insérée dans la rainure (4a1, 4c11) à travers un espace (5, 6) formé entre l'extrémité (4a3) du rebord (4a2, 4c13) et l'extrémité axiale correspondante du noyau de stator (1).

2. Stator de moteur électrique selon la revendication 1, dans lequel l'extrémité axiale de la feuille d'isolation (3) est insérée dans la rainure de manière inclinée.

3. Stator de moteur électrique selon la revendication 1, dans lequel l'extrémité axiale de la feuille d'isolation (3) est insérée dans la rainure de telle sorte que la partie insérée de la feuille d'isolation soit pliée en une forme coudée.

4. Stator de moteur électrique selon l'une quelconque des revendications 1 à 3, dans lequel une surface latérale intérieure de la rainure (4a4, 4c11) de chaque isolateur (4) dans laquelle l'extrémité axiale de la feuille d'isolation (3) est insérée est effilée de telle sorte que la rainure s'élargisse vers son ouverture.

5. Stator de moteur électrique selon l'une quelconque des revendications 1 à 4, dans lequel l'extrémité du rebord est formée pour avoir une forme courbe.

6. Stator de moteur électrique selon la revendication 1, dans lequel la rainure (4c11) est formée dans une surface intérieure (4c12) d'une partie de rebord extérieure (4c) de chaque isolateur (4) qui est prévue à une extrémité axiale d'une partie de culasse (1c) du noyau de stator (1).

7. Stator de moteur électrique selon la revendication 1 ou 6, dans lequel la rainure (4a4) est formée dans une surface latérale (4a1) d'une partie de corps (4a) de chaque isolateur (4) qui est prévue à une extrémité axiale d'une partie à dents (1a) du noyau de stator (1).
